# EUROPEAN PATENT APPLICATION

(11) **EP 4 763 408 A1**
(43) Date of publication of application: **24.06.2026**
(21) Application number: 25822354.4
(22) Date of filing: 10.06.2025
(51) Int. Cl.: B23K 31/12, B23K 37/00, G06N 20/00

(54) **WELDING MANAGEMENT DEVICE, WELDING MANAGEMENT METHOD, AND WELDING MANAGEMENT SYSTEM**

(30) Priority: 14.06.2024 KR 20240077282
(71) Applicant: LG Energy Solution, Ltd., Seoul 07335 (KR)
(72) Inventor: KIM, Sung Ryul, Daejeon 34122 (KR); YANG, Ho Jin, Daejeon 34122 (KR); PARK, Seong Geun, Daejeon 34122 (KR); LIM, Sung Sang, Daejeon 34122 (KR); OH, Jong Kyun, Daejeon 34122 (KR); KWON, Hyeon Seo, Daejeon 34122 (KR); MOON, Jon Ho, Daejeon 34122 (KR)
(74) Representative: Goddar, Heinz J.
(86) International application number: PCT/KR2025/007846
(87) International publication number: WO 2025/258945

(57) **Abstract**

According to some embodiments, a welding management device includes an interface configured to acquire electrical data collected during a welding process for a battery and a controller configured to calculate a first local reachability density (lrd) of the electrical data based on training data stored in a local outlier factor (LOF) model and the electrical data, calculate an LOF score of the electrical data based on a second lrd of neighboring data within a reference distance from the electrical data in the training data and the first lrd, and diagnose a welding state of the battery based on the LOF score.

## Description

### TECHNICAL FIELD

### Cross-reference to Related Applications

This application claims priority from Korean Patent Application No. 10-2024-0077282, filed on June 14, 2024, the disclosures of which are incorporated by reference herein.

### Technical Field

Embodiments disclosed herein relate to a welding management device, a welding management method, and a welding management system.

### BACKGROUND ART

In recent years, research and development for secondary batteries have been actively conducted. Here, secondary batteries are batteries capable of being recharged and discharged, and may be interpreted to encompass both conventional Ni/Cd batteries, Ni/MH batteries, or the like, and recent lithium ion batteries. Among secondary batteries, lithium ion batteries may have a higher energy density than conventional Ni/Cd batteries, Ni/MH batteries, or the like, and may be manufactured to be small and lightweight, so the lithium ion batteries may have high usability as a power source for mobile devices. In recent years, the lithium ion batteries have expanded their range of use to power sources for electric vehicles, making the batteries attract attention as a next-generation energy storage medium.

A welding process may be performed to manufacture battery cells. For example, electric resistance welding may be performed to form a negative tab of a cylindrical battery cell. During a welding process, electrical data such as voltage, current, temperature, and resistance of a welding device may be collected, and a welding state of the battery cell may be determined based on the electrical data. The accuracy of determining the welding state may vary depending on a method for collecting the electrical data, a method for processing the electrical data, or the like.

### DISCLOSURE OF THE INVENTION

### TECHNICAL PROBLEM

Embodiments disclosed herein are intended to provide a welding management device, a welding management method, and a welding management system capable of improving a method for collecting electrical data and a method for processing electrical data to enhance the determination performance for a welding state.

The technical objectives of the embodiments disclosed herein are not limited to those mentioned above, and other technical objectives not mentioned will be clearly understood by those skilled in the art from the following descriptions.

### TECHNICAL SOLUTION

According to some embodiments, a welding management device includes an interface configured to acquire electrical data collected during a welding process for a battery and a controller configured to calculate a first local reachability density (lrd) of the electrical data based on training data stored in a local outlier factor (LOF) model and the electrical data, calculate an LOF score of the electrical data based on a second lrd of neighboring data within a reference distance from the electrical data in the training data and the first lrd, and diagnose a welding state of the battery based on the LOF score.

According to some embodiments, the electrical data may include dynamic resistance values collected at a first measurement frequency during a period in which a welding voltage exceeds a reference voltage during the welding process, and the LOF model may be configured to calculate the LOF score based on the dynamic resistance values.

According to some embodiments, the controller may be configured to calculate the LOF score by inputting, into the LOF model, values after a first time has elapsed from a start time point of the period in which the reference voltage is exceeded, among the dynamic resistance values.

According to some embodiments, the controller may be configured to determine the number of data points of the dynamic resistance values based on the period in which the welding voltage exceeds the reference voltage and the first measurement frequency and calculate the number of neighboring data points within the reference distance based on a Euclidean distance having a dimension of the number of data points.

According to some embodiments, the controller may be configured to diagnose the welding state of the battery as defective when the LOF score exceeds a threshold score, and the threshold score may be determined based on tensile strength test data of test batteries manufactured by the welding process.

According to some embodiments, the controller may be configured to adjust the threshold score when a consumable of a welding device performing the welding process is replaced.

According to some embodiments, the electrical data may include a first data set less than a cutoff frequency and one or more second data sets greater than or equal to the cutoff frequency, and the controller may be configured to detect a time point at which a defect occurs in the welding process based on an inflection point of the one or more second data sets when the welding state is diagnosed as defective based on the first data set.

According to some embodiments, a welding management method includes acquiring electrical data collected during a welding process for a battery, calculating a first local reachability density (lrd) of the electrical data based on training data stored in a local outlier factor (LOF) model and the electrical data, calculating an LOF score of the electrical data based on a second lrd of neighboring data within a reference distance from the electrical data in the training data and the first lrd, and diagnosing a welding state of the battery based on the LOF score.

According to some embodiments, the electrical data may include dynamic resistance values collected at a first measurement frequency during a period in which a welding voltage exceeds a reference voltage during the welding process, and the LOF model may be configured to calculate the LOF score based on the dynamic resistance values.

According to some embodiments, the calculating of the LOF score may include calculating the LOF score by inputting, into the LOF model, values after a first time has elapsed from a start time point of the period in which the reference voltage is exceeded, among the dynamic resistance values.

According to some embodiments, the calculating of the LOF score may include determining the number of data points of the dynamic resistance values based on the period in which the welding voltage exceeds the reference voltage and the first measurement frequency and calculating the number of neighboring data points within the reference distance based on a Euclidean distance having a dimension of the number of data points.

According to some embodiments, the diagnosing of the welding state may include diagnosing the welding state of the battery as defective when the LOF score exceeds a threshold score, and the threshold score is determined based on tensile strength test data of test batteries manufactured by the welding process.

According to some embodiments, the welding management method may further include adjusting the threshold score when a consumable of a welding device performing the welding process is replaced.

According to some embodiments, the electrical data may include a first data set less than a cutoff frequency and one or more second data sets greater than or equal to the cutoff frequency, and the welding management method may further include detecting a time point at which a defect occurs in the welding process based on an inflection point of the one or more second data sets when the welding state is diagnosed as defective based on the first data set.

According to some embodiments, a welding management system includes a battery, a welding device configured to perform a welding process on the battery, and a welding management device configured to acquire electrical data collected during the welding process, calculate a first lrd of the electrical data based on training data stored in an LOF model and the electrical data, calculate an LOF score of the electrical data based on a second lrd of neighboring data within a reference distance from the electrical data in the training data and the first lrd, and diagnose a welding state of the battery based on the LOF score.

### ADVANTAGEOUS EFFECTS

According to the embodiments disclosed herein, a welding management device, a welding management method, and a welding management system capable of improving a method for collecting electrical data and a method for processing electrical data can be provided to enhance the determination performance for a welding state. In particular, defects, such as under-welding and over-welding, occurring during negative tap resistance welding can be detected through an electrical data model such as a local outlier factor (LOF) model.

The technical effects according to the embodiments disclosed herein are not limited to those mentioned above, and other effects not mentioned will be clearly understood by those skilled in the art from the disclosure herein.

### BRIEF DESCRIPTION OF THE DRAWINGS

FIG. 1 illustrates elements constituting a welding management system according to some embodiments.
FIG. 2 illustrates elements constituting a welding management device according to some embodiments.
FIGS. 3 to 5 illustrate a method for collecting electrical data according to some embodiments.
FIG. 6 illustrates a method for calculating a local outlier factor (LOF) score according to some embodiments.
FIG. 7 illustrates a method for diagnosing a welding state based on an LOF score according to some embodiments.
FIG. 8 illustrates a method for classifying welding strength based on an LOF score according to some embodiments.
FIG. 9 illustrates a process of setting a threshold score based on the relationship between tensile strength and an LOF score according to some embodiments.
FIG. 10 illustrates a method for adjusting a threshold score when a consumable of a welding device is replaced according to some embodiments.
FIG. 11 illustrates steps constituting a welding management method according to some embodiments.

### MODE FOR CARRYING OUT THE INVENTION

Hereinafter, embodiments disclosed in herein will be described with reference to the accompanying drawings. However, this is not intended to limit the disclosure herein to the specific embodiments, and it is to be construed to include various modifications, equivalents, and/or alternatives of embodiments disclosed herein.

It should be appreciated that embodiments herein and the terms used therein are not intended to limit the technological features set forth herein to particular embodiments and include various changes, equivalents, or replacements for a corresponding embodiment. With regard to the description of the drawings, similar or related reference numerals may be used to refer to similar or related elements. It is to be understood that a singular form of a noun corresponding to an item may include one or more of the things, unless the relevant context clearly indicates otherwise.

As used herein, each of phrases such as "A or B," "at least one of A and B," "at least one of A or B," "A, B, or C," "at least one of A, B, and C," and "at least one of A, B, or C, " may include any one of, or all possible combinations of the items enumerated together in a corresponding one of the phrases. Terms such as "1st" and "2nd," "first," "second," "A." "B," "(a)," or "(b)" may be used to simply distinguish a corresponding component from another, and do not limit the components in other aspects (e.g., importance or order) unless specifically stated otherwise.

In the present specification, it is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or indirectly (e.g., via a third element).

A method according to various embodiments disclosed herein may be included and provided in a computer program product. The computer program product may be traded as a product between a seller and a buyer. The computer program product may be distributed in the form of a machine-readable storage medium (e.g., a compact disc read only memory and CD-ROM), or be distributed (e.g., downloaded or uploaded) online via an application store, or between two operator devices directly. If distributed online, at least part of the computer program product may be temporarily generated or at least temporarily stored in the machine-readable storage medium, such as memory of the manufacturer's server, a server of the application store, or a relay server.

According to embodiments disclosed herein, each component (e.g., a module or a program) of the above-described components may include a single entity or multiple entities, and some of the plurality of entities may be disposed separately from other components. According to embodiments disclosed herein, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to embodiments disclosed herein, operations performed by the module, the program, or another component may be carried out sequentially, in parallel, repeatedly, or heuristically, or one or more of the operations may be executed in a different order or omitted, or one or more other operations may be added.

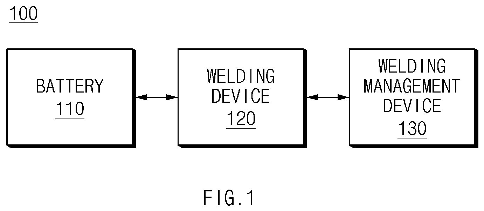

FIG. 1 illustrates a method in which a welding management system operates according to some embodiments.

Referring to FIG. 1, a welding management system 100 may include a welding device 120 that performs a welding process for a battery 110 and a welding management device 130 that manages the welding process. However, the welding management system is not limited thereto, and some components may be omitted from the welding management system 100, or other general-purpose components may be further included in the welding management system 100.

The battery 110 may be formed by the welding process. For example, the battery 110 may include a battery cell, a battery module, a battery pack, and the like. The battery cell may include a cylindrical battery cell. The cylindrical battery cell may include a rivet, a collector, a tab, a beading, and the like formed on a positive or negative electrode, and the detailed structure of such a cylindrical battery cell may be formed by welding.

The welding device 120 may perform the welding process to form the battery 110. The welding process may include a resistance welding process. During the resistance welding process, voltage and current may be input to the welding device 120, the welding device 120 may output voltage and current to a welding target, and the temperature, resistance, and the like of the welding target may be measured. The quality of the welding process for the battery 110 may be determined based on whether electrical data as described above during the welding process is out of an appropriate range. In view of this, a model that estimates a welding state based on the electrical data may be utilized.

The welding management device 130 may manage the welding process for the battery 110 performed by the welding device 120. The welding management device 130 may diagnose the welding state of the battery cell 110 using a state diagnosis model. For example, the welding management device 130 may determine whether the state diagnosis model for diagnosing the welding state is operating normally or whether correction of the state diagnosis model is necessary. According to an embodiment, the state diagnosis model may include an unsupervised learning-based model such as a local outlier factor (LOF) model, a one-class support vector machine (OC-SVM) model, a deep support vector data technique (Deep SVDD), or the like, or a supervised learning-based model such as XGBoost. According to embodiments disclosed herein, defects occurring during negative electrode tab resistance welding, such as under-welding and over-welding, may be detected through an electrical data model such as an LOF model.

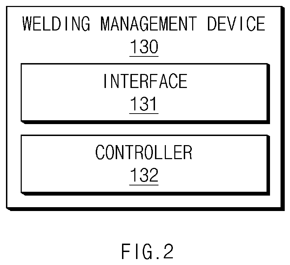

FIG. 2 illustrates elements constituting a welding management device according to some embodiments.

Referring to FIG. 2, the welding management device 130 may include an interface 131 and a controller 132. However, the welding management device is not limited thereto, and some components may be omitted from the welding management device 130, or other general-purpose components may be further included in the welding management device 130.

The interface 131 may be configured to acquire electrical data collected during the welding process for the battery 110. For example, the interface 131 may include a sensor configured to measure electrical data, and the sensor may include a voltage sensor, a current sensor, a temperature sensor, a resistance sensor, or the like. Alternatively, the sensor configured to measure electrical data may be provided outside the welding management device 130, and the interface 131 may include a communication unit configured to receive electrical data from the external sensor in a wired and/or wireless manner.

The controller 132 may include a memory and a processor. The processor of the controller 132 may be implemented as an array of a number of logic gates for processing various operations or as a general-purpose microprocessor, and may consist of a single processor or a plurality of processors. For example, the processor may be implemented in the form of at least one of a microprocessor, a central processing unit (CPU), a graphics processing unit (GPU), and an application processor (AP).

The memory of the controller 132 may store various data, commands, mobile applications, computer programs, and the like. The processor may process various operations by executing commands stored in the memory. The memory may be implemented in a form of a non-volatile device such as a read-only memory (ROM), a programmable ROM (PROM), an erasable programmable ROM (EPROM), an electrically erasable PROM (EEPROM), a flash memory, a parallel random-access memory (PRAM), a magneto-resistive RAM (MRAM), a resistive RAM (RRAM), a ferroelectric RAM (FRAM), or the like, or a volatile device such as a dynamic RAM (DRAM), a static RAM (SRAM), a synchronous dynamic RAM (SDRAM), a parallel RAM (PRAM), or the like, or may be implemented in a form of a hard disk drive (HDD), a solid state drive (SSD), a secure digital (SD), Micro-SD, or a combined form thereof.

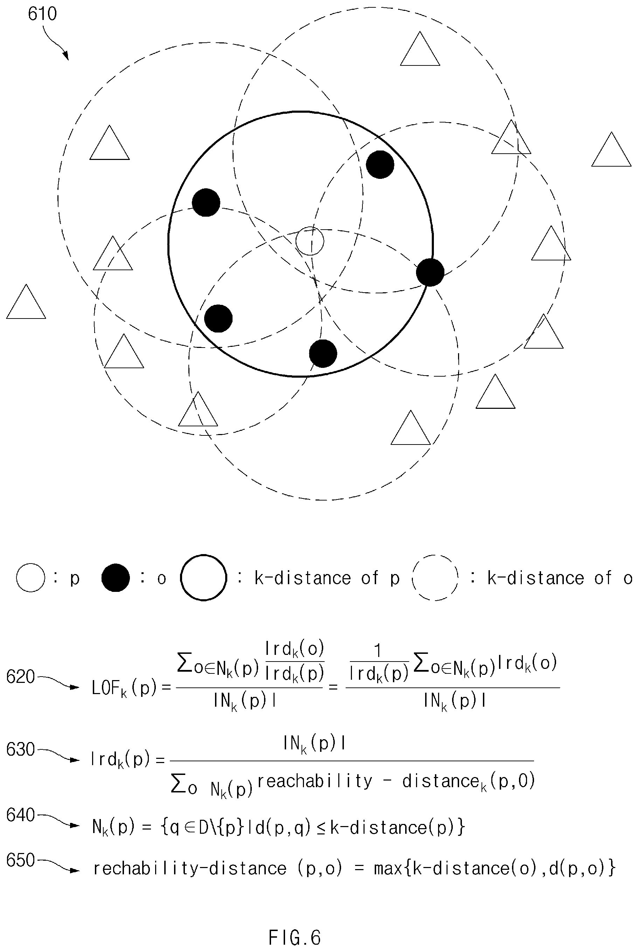

The controller 132 may be configured to calculate a first local reachability density (lrd) of electrical data based on training data and electrical data stored in the LOF model. The LOF model may include a model trained to diagnose a welding state corresponding to electrical data using an LOF algorithm. The LOF model may be implemented as an artificial intelligence model trained through various machine learning techniques. The LOF model stores training data used for model training, and the training data may include a set of electrical data measured during the welding process. The LOF model may calculate the first lrd of the electrical data collected from the battery 110. The lrd value of the LOF algorithm may represent the density of the possibility that new data will reach existing data. A specific calculation process for the first lrd may be referred to in FIG. 6, which will be described below.

The controller 132 may be configured to calculate an LOF score of the electrical data based on a second lrd of neighboring data within a reference distance from the electrical data and a first lrd, in the training data. The training data and electrical data may be n-dimensional data. For example, the training data and electrical data may be n-dimensional dynamic resistance data. Alternatively, other types of electrical data, such as welding voltage, welding current, transformer voltage, and welding temperature, may be utilized instead of dynamic resistance. The dimension n of the training data and electrical data may correspond to the number of collected values. For example, 140-dimensional dynamic resistance data may contain 140 resistance values measured at regular intervals during the welding process. A distance from the electrical data may be a distance in an n-dimensional space. In an embodiment, the reference distance may refer to k training data points nearest to the electrical data. When k is 5, 5 second lrd values for 5 training data point within the reference distance may be calculated. The LOF model may calculate the LOF score of electrical data based on the first lrd and k second lrds.

The controller 132 may be configured to diagnose the welding state of the battery 110 based on the LOF score. The LOF score may function as an indicator representing the welding state of the battery 110. The LOF score may replace conventional indicators such as tensile strength. Tensile strength may require separate measuring equipment and measuring processes, and batteries sampled for tensile strength measurements may be destroyed. In contrast, LOF score-based diagnosis may perform non-destructive full inspection.

According to an embodiment, the electrical data may include dynamic resistance values collected at a first measurement frequency during a period in which a welding voltage exceeds a reference voltage during the welding process, and the LOF model may be configured to calculate the LOF score based on the dynamic resistance values. For example, electrical data may be collected at a first measurement frequency during a period in which the welding voltage exceeds 0.3 V, and the electrical data may be voltage, current, temperature, and the like in addition to dynamic resistance. For example, the first measurement frequency may be 50 kHz. Specific values of the reference voltage and the first measurement frequency may be changed as needed.

According to an embodiment, the controller 132 may be configured to calculate the LOF score by inputting, into the LOF model, values after a first time has elapsed from a start time point of the period in which the reference voltage is exceeded, among the dynamic resistance values. For example, the first time may be the time taken to pass through first 30 values and may be determined based on the first measurement frequency. A number other than 30 may be utilized as needed. By excluding the first 30 values in this way, transient-state data may be excluded, thereby improving the diagnostic performance of the LOF model.

According to an embodiment, the controller 132 may be configured to determine the number of data points of the dynamic resistance values based on the period in which the welding voltage exceeds the reference voltage and the first measurement frequency, and calculate the number of neighboring data points within the reference distance based on the Euclidean distance having the dimension of the number of data points. For example, when 140 data values are collected, the 140-dimensional Euclidean distance may be utilized for distance calculation of the LOF algorithm. According to an embodiment, the reference distance may be determined such that the number of neighboring data points is a preset k.

According to an embodiment, the controller 132 may be configured to diagnose the welding state of the battery 110 as defective when the LOF score exceeds a threshold score, and the threshold score may be determined based on tensile strength test data of test batteries manufactured by the welding process. For example, the test batteries may be manufactured through the welding process in a mass production line and the tensile strength values of the test batteries may be tested. Based on the tensile strength test data, the threshold score may be set, and the defect detection performance and false positive performance for normal welding may be verified according to the threshold score.

According to an embodiment, the controller 132 may be configured to adjust the threshold score when a consumable of the welding device 120 performing the welding process is replaced. When the consumable is replaced, the dispersion of electrical data collected from the battery 110 may remain constant, but a mean or center position of the electrical data may change. In this case, when the threshold score is maintained at the same value, a false positive may occur where a normal weld is classified as defective, and thus the threshold score may be adjusted based on the variation in the mean or center position.

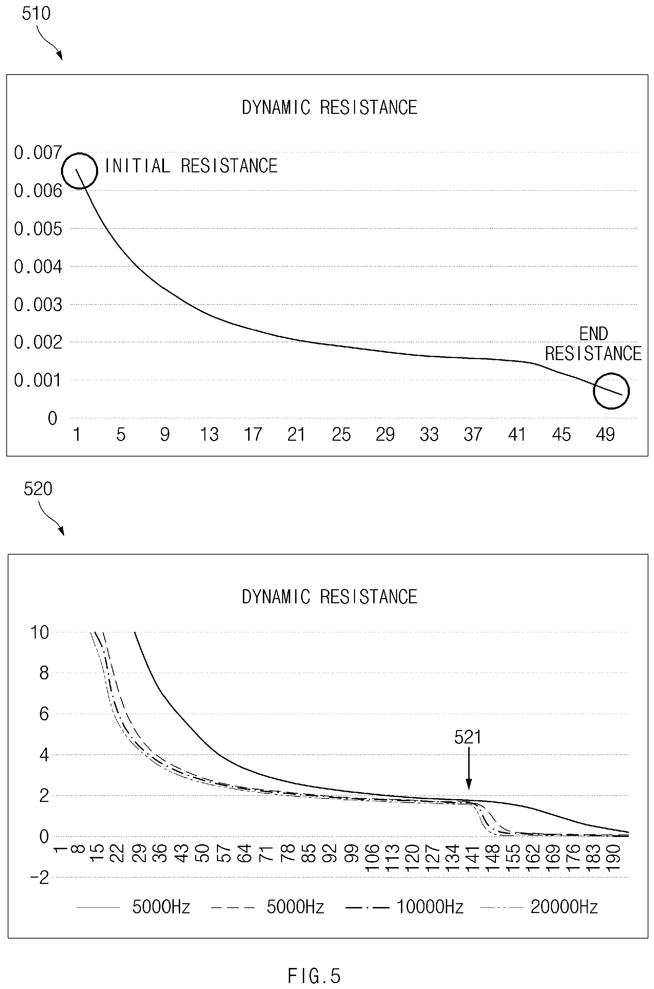

According to an embodiment, the electrical data may include a first data set less than a cutoff frequency and one or more second data sets greater than or equal to the cutoff frequency, and the controller 132 may be configured to detect a time point at which a defect occurs in the welding process based on an inflection point of the one or more second data sets when the welding state is diagnosed as defective based on the first data set. In the case of conventional electrical data measurement, only the first data set less than the cutoff frequency is collected, but in contrast, in the welding management system 100, data may also be collected for a frequency range greater than or equal to the cutoff frequency. That is, in the welding management system 100, the cutoff frequency may be substantially increased compared to the conventional cutoff frequency. As illustrated in FIG. 5 described below, in the case of the one or more second data sets greater than or equal to the cutoff frequency, a data inflection point may be shown more clearly than in the case of first data set less than the cutoff frequency, thereby enabling a time point at which the cause of a welding defect occurs to be detected.

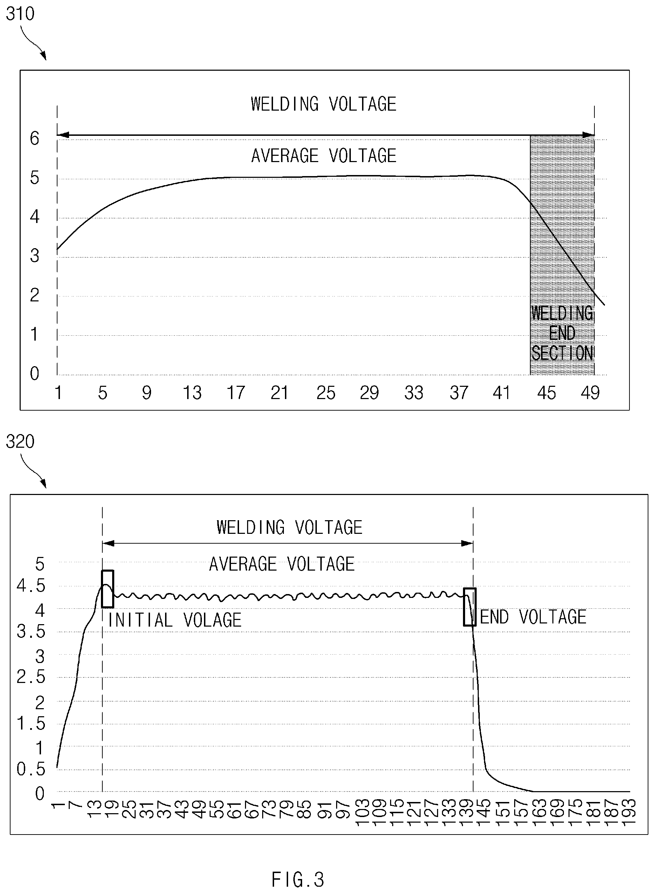

FIGS. 3 to 5 illustrate a method for collecting electrical data according to some embodiments.

Referring to FIG. 3, graph 310 representing a conventional method for measuring welding voltage and graph 320 representing an improvement method may be illustrated.

The conventional method of graph 310 collects data during a period in which a welding current exceeds a specific value, while the improvement method of graph 320 may collect data during a period in which a welding voltage exceeds a specific value. In the case of the improvement method, since data collection begins based on voltage rather than current, a welding execution section and a data collection section may coincide.

In the conventional method of graph 310, the same number of data points are collected regardless of the duration of the data collection section, but in the improvement method of graph 320, a greater number of data points may be collected as the duration of the data collection section becomes longer.

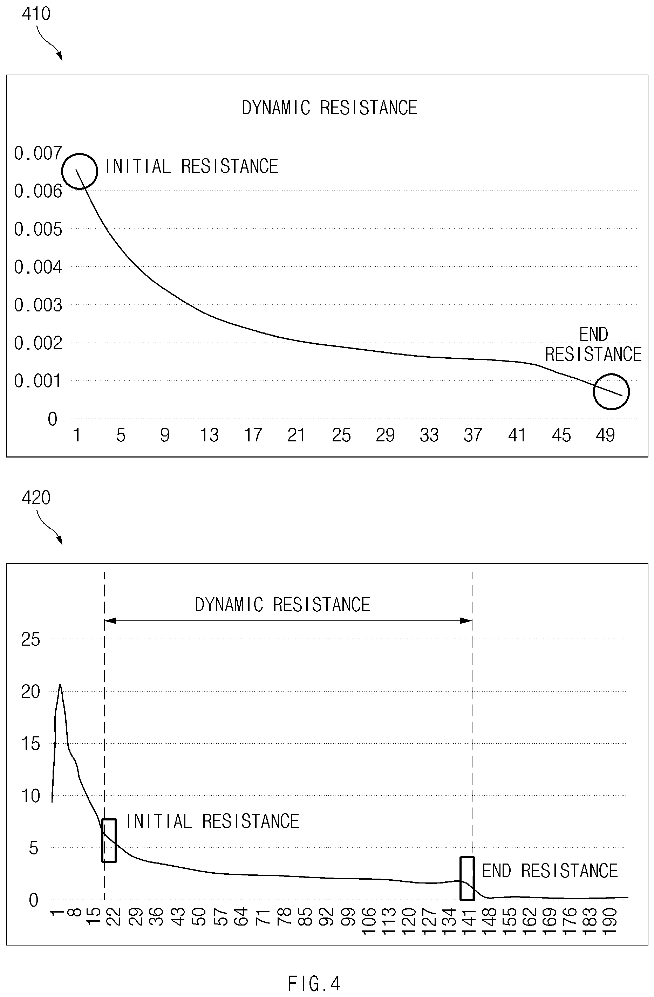

Referring to FIG. 4, graph 410 representing a conventional method for measuring dynamic resistance and graph 420 representing an improvement method may be illustrated. Just as in the case of the welding voltage in FIG. 3, data collection may be performed more appropriately in the case of the dynamic resistance in FIG. 4 through the improvement method.

Referring to FIG. 5, graph 510 representing dynamic resistance values measured in a range less than the cutoff frequency and graph 520 representing dynamic resistance values measured in a range greater than or equal to the cutoff frequency may be illustrated.

Graph 510 may represent the dynamic resistance values measured at a frequency of 1 kHz. For example, the cutoff frequency may be in a range of 1 kHz to 5 kHz. When a frequency of a welding voltage and/or a welding current provided by the welding device 120 is changed, the dynamic resistance value measured in the battery 110, which is the welding target, may also change. The dynamic resistance value may include an impedance value. Graph 520 may represent dynamic resistance values measured in a frequency range exceeding the cutoff frequency. As illustrated, at frequencies such as 5 kHz, 10 kHz, 20 kHz, and the like, an inflection point 521 where an increase/decrease pattern of the dynamic resistance values changes may be shown more clearly. According to an embodiment, when the welding state is diagnosed as defective based on the LOF score in the range less than the cutoff frequency of graph 510, the inflection point 521 estimated as the cause of the welding defect may be detected in the range greater than or equal to the cutoff frequency of graph 520.

FIG. 6 illustrates a method for calculating a local outlier factor (LOF) score according to some embodiments.

Referring to FIG. 6, a distribution 610 of training data and electrical data used to calculate the LOF score and equations 620 to 650 for calculating the LOF score may be illustrated.

In the distribution 610, electrical data p and neighboring data o within a reference distance from the electrical data p may be illustrated. According to an embodiment, the k number of neighboring data points o may be set to 5, and the reference distance from the electrical data p may be set to a distance value such that k becomes 5. The LOF score of the electrical data p may be calculated based on a first lrd value of the electrical data p and 5 second lrd values of 5 neighboring data points o.

In equation 620, k may be 5 as the number of neighboring data points o. An LOF score LOFₖ(p) may be calculated based on a first lrd value lrdₖ(p), a second lrd values lrdₖ(o), and a set Nₖ(p) of neighboring data o. |Nₖ(p)| may be the size of Nₖ(p). In equation 630, the first lrd value lrdₖ(p) may be calculated based on the set Nₖ(p) of neighboring data o and a reachability distance reachability-distanceₖ (p, o). In a similar way, the second lrd values lrdₖ(o) may also be calculated.

In equation 640, the set Nₖ(p) of neighboring data o may be calculated based on a distance d(p, q) between the training data and the electrical data p and a distance k-distance (p) to a kth nearest training data point from the electrical data p. In equation 650, the reachability distance reachability-distanceₖ (p, o) may be calculated based on the distance k-distance(p) and the distance d(p, q) to the kth nearest training data point from the electrical data p. When the number of data values of electrical data p is n, the distance d(p, q) may be calculated as an n-dimensional Euclidean distance.

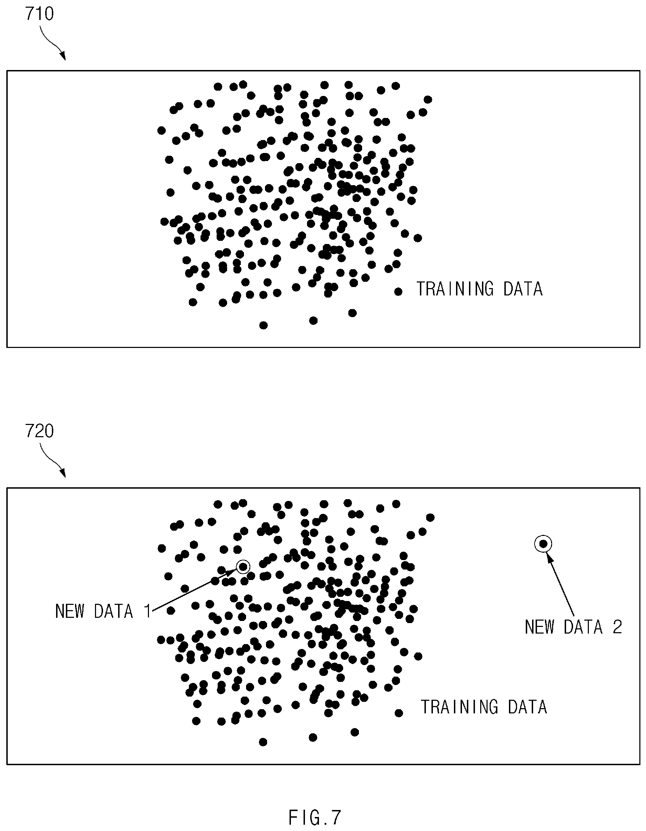

FIG. 7 illustrates a method for diagnosing a welding state based on an LOF score according to some embodiments.

Referring to FIG. 7, training data 710 utilized to calculate the LOF score and new data 720 displayed together with the training data 710 may be illustrated. Although the data is represented in a simplified two-dimensional manner, the LOF model may generally operate in higher dimensions, such as n = 140.

The LOF model may be trained based on the training data 710. Each data point of the training data 710 may be electrical data measured during the welding process. For example, the training data 710 and the new data 720 may represent any one of the data of dynamic resistance, welding voltage, welding current, and welding temperature.

The new data 720 may include New data 1 located close to the distribution of the training data 710 and New data 2 located far from the distribution of training data 710. LOF scores of New data 1 and New data 2 may be calculated in the same manner as in FIG. 6. The LOF score of New data 1 may be calculated having a value close to 1, which may be classified as a normal weld. On the other hand, the LOF score of New data 2 may be calculated as having a value higher than 1, which may have a high probability of being classified as a defective weld.

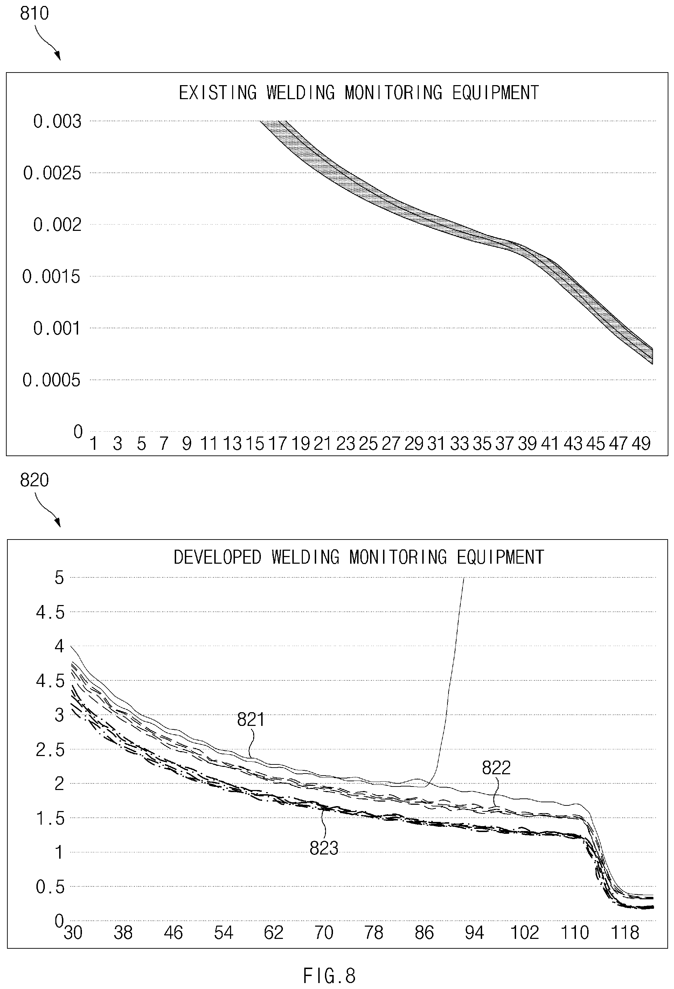

FIG. 8 illustrates a method for classifying welding strength based on an LOF score according to some embodiments.

Referring to FIG. 8, graph 810 representing a conventional method for monitoring a welding state based on electrical data and graph 820 representing an improvement method may be illustrated.

In the conventional method of graph 810, the model scores may not show a large difference even when the welding strength changes. On the other hand, in the improvement method of the graph 820 according to the welding management system 100, excessive welding 821, normal welding 822, and insufficient welding 823 may be classified into score values that are distinguishable from each other.

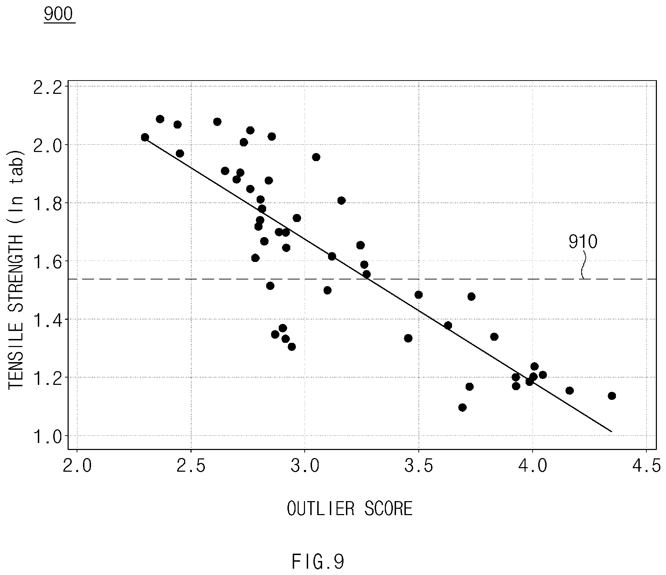

FIG. 9 illustrates a process of setting a threshold score based on a relationship between tensile strength and an LOF score according to some embodiments.

Referring to FIG. 9, graph 900 may be illustrated that shows the relationship between tensile strength measured for a plurality of test batteries and an LOF score.

As shown in graph 900, the tensile strength of the test batteries and the LOF score may have a significant correlation with each other. Quantitatively, the tensile strength and the LOF score of the graph 900 may exhibit an R² value at a level of around 80%. A correlation level of 80% may be observed not only in the overall range but also in a region of interest near a tensile strength specification value of the batteries 110.

A threshold score 910 may be set in graph 900. When the tensile strength specification of a negative tab of the battery is approximately 0.9 kgf, the 50% level of the average value of tensile strength test data may be approximately 1.51 kgf, and test batteries with this as a control limit may be produced as samples. In this case, the LOF score corresponding to 1.51 kgf may be set as a threshold score 910, and even in this case, it may be confirmed that a false positive, in which a normal weld is incorrectly classified as defective does not increase. In this manner, the threshold score 910 may be set based on the tensile strength test data of the test batteries.

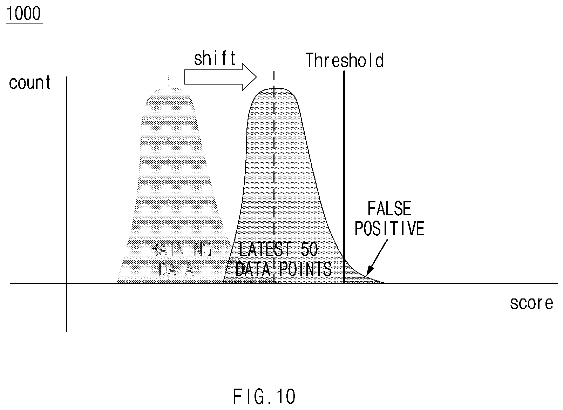

FIG. 10 illustrates a method for adjusting a threshold score when a consumable of a welding device is replaced according to some embodiments.

Referring to FIG. 10, graph 1000 may be illustrated that shows a method for adjusting a threshold score when a consumable of the welding device 120 is replaced.

When a consumable is replaced, an average position of the LOF score may shift. In this case, if the threshold score is not changed, a large number of false positives may occur in which a normal weld is incorrectly diagnosed as defective. In order to address this, the amount of shift may be calculated by collecting 50 data points after the consumable of the welding device 120 is replaced, and the threshold score may be adjusted by the same amount.

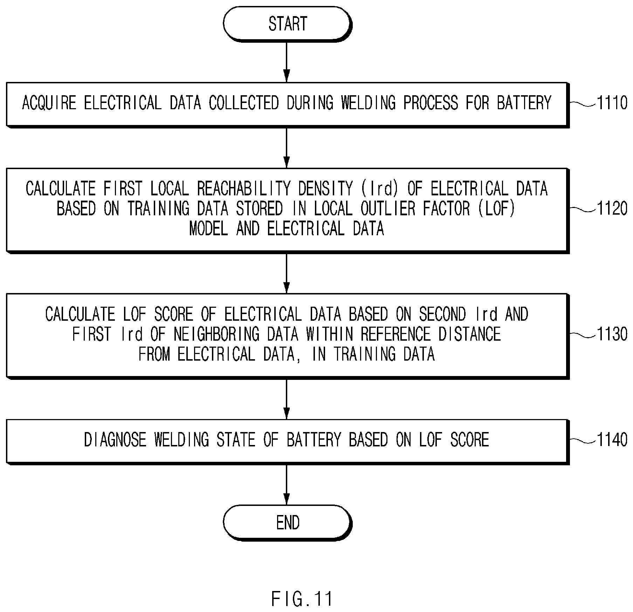

FIG. 11 illustrates steps constituting a welding management method according to some embodiments.

Referring to FIG. 11, a welding management method 1100 may include steps 1110 to 1140. However, the welding management method is not limited thereto, and some steps may be omitted or other general steps may be added, and the steps of the welding management method 1100 may be executed in a different order than the illustrated order.

The welding management method 1100 may include steps that are processed in time series in the welding management device 130. Therefore, even when the content is omitted below, the content described above for the welding management device 130 may be equally applied to the welding management method 1100.

Steps 1110 to 1140 of the welding management method 1100 may be performed by the interface 131 and controller 132 of the welding management device 130.

In step 1110, the welding management device 130 may perform a step of acquiring electrical data collected during a welding process for a battery.

In step 1120, the welding management device 130 may perform a step of calculating a first lrd of electrical data based on training data and electrical data stored in the LOF model.

In step 1130, the welding management device 130 may perform a step of calculating an LOF score of the electrical data based on a second lrd of neighboring data within a reference distance from the electrical data and a first lrd, in the training data.

In step 1140, the welding management device 130 may perform a step of diagnosing the welding state of the battery based on the LOF score.

According to an embodiment, the welding management method 1100 may be implemented in the form of a computer program stored in a computer-readable storage medium. That is, the computer program may include commands for implementing the welding management method 1100, and the commands of the program may be stored in the computer-readable storage medium. The computer program may include a mobile application.

In an embodiment, a computer-readable storage medium may include magnetic media such as hard disks, floppy disks, and magnetic tapes, optical media such as CD-ROMs and DVDs, magneto-optical media such as floptical disks, and a hardware device specially configured to store and execute computer program instructions, such as ROM, RAM, flash memory, or the like. Computer program instructions may include machine language code generated by a compiler and high-level language code that may be executed by a computer using an interpreter, or the like.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The above description is merely an example of the technical idea disclosed herein, and those with ordinary skill in the art to which the embodiments disclosed herein belong may make various modifications and variations without departing from the essential characteristics of the embodiments disclosed herein. Accordingly, the embodiments disclosed herein are not intended to limit the technical ideas of the embodiments disclosed herein but rather to explain them, and the scope of the technical ideas disclosed herein is not limited by these embodiments. The scope of protection disclosed herein should be interpreted by the accompanying claims, and all technical ideas within the scope equivalent thereto should be construed as being included in the scope of rights herein.

### (Reference Signs List)

| | | | |
|---|---|---|---|
| 100: | Welding management system | 120: | Battery |
| 120: | Welding device | 130: | Welding management device |
| 131: | Interface | 132: | Controller |

## Claims

1. A welding management device comprising:
an interface configured to acquire electrical data collected during a welding process for a battery; and
a controller configured to:
calculate a first local reachability density (lrd) of the electrical data based on training data stored in a local outlier factor (LOF) model and the electrical data;
calculate an LOF score of the electrical data based on a second lrd of neighboring data within a reference distance from the electrical data in the training data and the first lrd; and
diagnose a welding state of the battery based on the LOF score.

2. The welding management device of claim 1, wherein the electrical data includes dynamic resistance values collected at a first measurement frequency during a period in which a welding voltage exceeds a reference voltage during the welding process, and
the LOF model is configured to calculate the LOF score based on the dynamic resistance values.

3. The welding management device of claim 2, wherein the controller is configured to calculate the LOF score by inputting, into the LOF model, values after a first time has elapsed from a start time point of the period in which the reference voltage is exceeded, among the dynamic resistance values.

4. The welding management device of claim 2, wherein the controller is configured to:
determine the number of data points of the dynamic resistance values based on the period in which the welding voltage exceeds the reference voltage and the first measurement frequency; and
calculate the number of neighboring data points within the reference distance based on a Euclidean distance having a dimension of the number of data points.

5. The welding management device of claim 1, wherein the controller is configured to diagnose the welding state of the battery as defective when the LOF score exceeds a threshold score, and
the threshold score is determined based on tensile strength test data of test batteries manufactured by the welding process.

6. The welding management device of claim 5, wherein the controller is configured to adjust the threshold score when a consumable of a welding device performing the welding process is replaced.

7. The welding management device of claim 1, wherein the electrical data includes a first data set less than a cutoff frequency and one or more second data sets greater than or equal to the cutoff frequency, and
the controller is configured to detect a time point at which a defect occurs in the welding process based on an inflection point of the one or more second data sets when the welding state is diagnosed as defective based on the first data set.

8. A welding management method comprising:
acquiring electrical data collected during a welding process for a battery;
calculating a first local reachability density (lrd) of the electrical data based on training data stored in a local outlier factor (LOF) model and the electrical data;
calculating an LOF score of the electrical data based on a second lrd of neighboring data within a reference distance from the electrical data in the training data and the first lrd; and
diagnosing a welding state of the battery based on the LOF score.

9. The welding management method of claim 8, wherein the electrical data includes dynamic resistance values collected at a first measurement frequency during a period in which a welding voltage exceeds a reference voltage during the welding process, and
the LOF model is configured to calculate the LOF score based on the dynamic resistance values.

10. The welding management method of claim 9, wherein the calculating of the LOF score includes calculating the LOF score by inputting, into the LOF model, values after a first time has elapsed from a start time point of the period in which the reference voltage is exceeded, among the dynamic resistance values.

11. The welding management method of claim 9, wherein the calculating of the LOF score includes:
determining the number of data points of the dynamic resistance values based on the period in which the welding voltage exceeds the reference voltage and the first measurement frequency; and
calculating the number of neighboring data points within the reference distance based on a Euclidean distance having a dimension of the number of data points.

12. The welding management method of claim 8, wherein the diagnosing of the welding state includes diagnosing the welding state of the battery as defective when the LOF score exceeds a threshold score, and
the threshold score is determined based on tensile strength test data of test batteries manufactured by the welding process.

13. The welding management method of claim 12, further comprising adjusting the threshold score when a consumable of a welding device performing the welding process is replaced.

14. The welding management method of claim 8, wherein the electrical data includes a first data set less than a cutoff frequency and one or more second data sets greater than or equal to the cutoff frequency, and
the welding management method further comprises detecting a time point at which a defect occurs in the welding process based on an inflection point of the one or more second data sets when the welding state is diagnosed as defective based on the first data set.

15. A welding management system comprising:
a battery;
a welding device configured to perform a welding process on the battery; and
a welding management device configured to acquire electrical data collected during the welding process, calculate a first local reachability density (lrd) of the electrical data based on training data stored in an LOF model and the electrical data, calculate a local outlier factor (LOF) score of the electrical data based on a second lrd of neighboring data within a reference distance from the electrical data in the training data and the first lrd, and diagnose a welding state of the battery based on the LOF score.
